(19) Europäisches Patentamt
European Patent Office
Office européen des brevets

(11) **EP 1 671 023 B1**

(12) **FASCICULE DE BREVET EUROPEEN**

(45) Date de publication et mention
de la délivrance du brevet:
**21.03.2007 Bulletin 2007/12**

(51) Int Cl.:
***F02D 41/00*** *(2006.01)*

(21) Numéro de dépôt: **04764225.1**

(86) Numéro de dépôt international:
**PCT/EP2004/009237**

(22) Date de dépôt: **18.08.2004**

(87) Numéro de publication internationale:
**WO 2005/033494 (14.04.2005 Gazette 2005/15)**

(54) **PROCEDE DE GESTION DE L' ALIMENTATION EN AIR D' UN MOTEUR, DESTINE NOTAMMENT A LA GESTION D' UN MOTEUR TURBOCOMPRESSE**

MOTORLUFTZUFUHRSTEUERVERFAHREN, DAS ZUM BEISPIEL ZUR STEUERUNG EINES MOTORS MIT TURBOLADER BESTIMMT IST

ENGINE AIR SUPPLY CONTROL METHOD WHICH IS INTENDED, FOR EXAMPLE, FOR THE CONTROL OF A TURBOCHARGED ENGINE

(84) Etats contractants désignés:
**DE GB IT SE**

(30) Priorité: **08.10.2003 FR 0311741**

(43) Date de publication de la demande:
**21.06.2006 Bulletin 2006/25**

(73) Titulaire: **Siemens VDO Automotive
31036 Toulouse (FR)**

(72) Inventeur: **ROUPHAEL, Roger
F-31240 L'Union (FR)**

(56) Documents cités:
**EP-A- 1 347 163          FR-A- 2 824 596
US-A- 5 377 112          US-A- 6 035 640
US-A1- 2003 004 677          US-A1- 2003 010 019**

EP 1 671 023 B1

**Description**

La présente invention concerne un procédé de gestion de l'alimentation en air d'un moteur, destiné notamment à la gestion d'un moteur turbocompressé et plus particulièrement un tel moteur destiné à une voiture de tourisme, comme décrit par exemple dans le document US 5,377,112.

Généralement, dans un moteur, la gestion de l'alimentation en air se fait en mesurant le débit d'air massique traversant ce moteur. Il existe plusieurs méthodes pour connaître ce débit massique. Il est par exemple connu de mesurer la vitesse de l'air et sa température au niveau d'une section connue du système d'alimentation en air, par exemple au niveau du papillon commandant le flux d'air dans le moteur. Une telle mesure est réalisée notamment sur des voitures de course ou bien des motos. Une autre manière pour déterminer ce débit consiste à mesurer la pression dans le collecteur d'admission, appelé aussi manifold, le régime du moteur et la température de l'air. Cette méthode est couramment utilisée sur des véhicules automobiles. Pour des véhicules haut de gamme, ce débit est parfois aussi mesuré à l'aide d'un fil que l'on chauffe en y faisant passer un courant électrique et dont on mesure la résistance à l'aide d'un pont de Wheastone. Toutes ces mesures sont connues de l'homme du métier et ne sont pas développées ici.

Dans un moteur turbocompressé, et notamment un tel moteur équipé d'un papillon électrique, l'importance de la mesure de la pression d'échappement pour la détermination de la perte de couple est apparue et plus particulièrement sur les moteurs de relativement faible cylindrée. En effet, une requête du conducteur par l'intermédiaire de la pédale d'accélérateur peut être interprétée comme la requête d'un couple donné. Il convient alors de déterminer le couple du moteur, et donc aussi les pertes de couple internes au moteur dues notamment à des frottements et des contre-pressions, pour pouvoir répondre à cette requête. La pression à l'échappement est alors un facteur à prendre en compte pour déterminer les pertes de couple internes au moteur.

La présente invention a alors pour but de fournir un procédé de gestion de l'alimentation en air d'un moteur qui permette de prendre en compte la pression à l'échappement pour permettre par exemple de déterminer la perte de couple du moteur sans pour autant, de préférence, augmenter le prix de revient du système de gestion de la pression d'échappement par le rajout d'un capteur de pression. Un autre but de l'invention peut être aussi de gérer le système d'alimentation en air d'un moteur à partir de la pression et de la température d'échappement.

A cet effet, elle propose un procédé de gestion de l'alimentation en air d'un moteur turbocompressé comportant un collecteur d'admission en aval du compresseur du turbocompresseur et un collecteur d'échappement en amont de la turbine du turbocompresseur dans lequel on détermine le débit d'air massique alimentant le moteur et/ou la pression régnant dans le collecteur d'admission ainsi que la température dans le collecteur d'échappement.

Selon la présente invention, la pression dans le collecteur d'échappement est déterminée en fonction de la pression régnant dans le collecteur d'admission, du régime du moteur, des températures régnant dans les cylindres et dans le collecteur d'échappement, la pression régnant dans le collecteur d'admission pouvant éventuellement être déterminée à partir du débit d'air massique et inversement.

Pour plus de précision dans le calcul de la pression à l'échappement, un coefficient correcteur dépendant de la pression ambiante environnante est de préférence prévu. Dans ce cas, la pression dans le collecteur d'échappement $P_{éch}$ se calcule par exemple par une formule du type :

$$P_{éch} = [A(T_c) * MAP - B(N, AMP, T_{éch})] / C(T_{éch}),$$

où A, B et C sont des fonctions prédéterminées, $T_c$ la température dans les cylindres, MAP la pression dans le collecteur d'admission, N le régime du moteur, AMP la pression ambiante et $T_{éch}$ la température des gaz brûlés dans le collecteur d'échappement.

Dans un tel procédé, lorsque le débit d'air alimentant le moteur est régulé à l'aide d'un papillon et lorsque ce papillon reste proche de sa position fermée dans des limites prédéterminées durant un laps de temps prédéfini, alors on peut avantageusement calculer la pression ambiante AMP extérieure à partir de la pression à l'échappement en fonction du régime du moteur.

La présente invention propose également un procédé de gestion de l'alimentation en air d'un moteur turbocompressé comportant un collecteur d'admission en aval du compresseur du turbocompresseur et un collecteur d'échappement en amont de la turbine du turbocompresseur dans lequel on détermine le débit d'air massique alimentant le moteur et/ou la pression régnant dans le collecteur d'admission ainsi que la température dans le collecteur d'échappement.

Selon l'invention, la pression dans le collecteur d'échappement est mesurée à l'aide d'un capteur ou similaire, et la pression régnant dans le collecteur d'admission est déterminée à partir de la pression d'échappement mesurée en fonction du régime du moteur, des températures régnant dans les cylindres et dans le collecteur d'échappement, le débit d'air massique pouvant éventuellement être déterminé à partir de la pression régnant dans le collecteur d'admission.

Dans ce procédé on prévoit avantageusement un coefficient correcteur dépendant de la pression ambiante environnante. Dans ce cas, la pression dans le collecteur d'admission MAP se calcule par exemple par une formule du type :

$$\text{MAP} = [F(N, T_{\text{éch}}) * P_{\text{éch}} + G(N, \text{AMP}, T_{\text{éch}})] / [H(N, T_c)],$$

où F, G et H sont des fonctions prédéterminées, $T_c$ la température dans les cylindres, $P_{\text{éch}}$ la pression dans le collecteur d'échappement, N le régime du moteur, AMP la pression ambiante et $T_{\text{éch}}$ la température des gaz brûlés dans le collecteur d'échappement.

Dans un procédé selon l'invention, la température dans le collecteur d'échappement est avantageusement obtenue à partir d'une modélisation. De telles modélisations existent pour notamment protéger le turbocompresseur d'une surchauffe. Elles permettent d'éviter l'utilisation d'un capteur qui serait soumis à des conditions d'utilisation sévères car les variations de température dans le collecteur d'échappement sont importantes et les températures très élevées lors du fonctionnement du moteur.

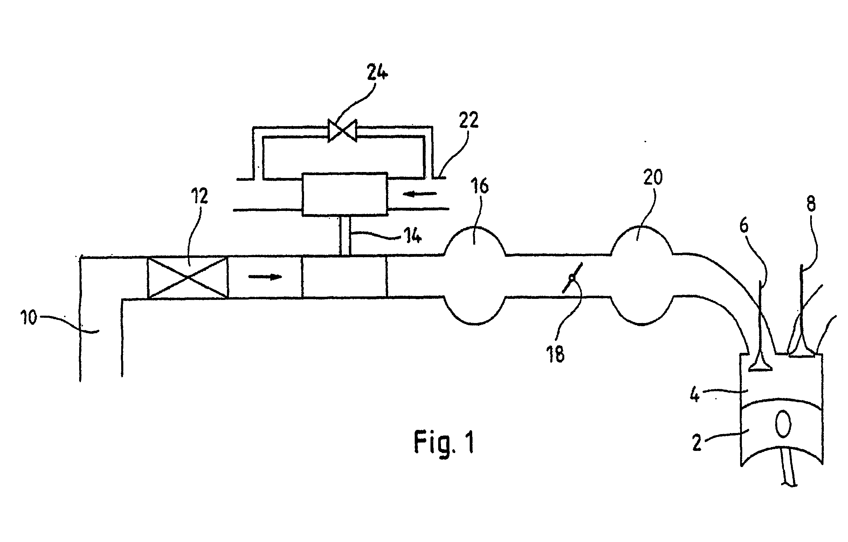

Des détails et avantages de la présente invention ressortiront mieux de la description qui suit, faite en référence au dessin schématique annexé sur lequel :

L'unique figure représente schématiquement un système d'alimentation en air d'un moteur turbocompressé.

On reconnaît sur la droite de cette unique figure, en aval du système d'alimentation représenté, un piston 2 pouvant se déplacer dans un cylindre 4. Une soupape 6 commande l'admission de l'air dans le cylindre 4. Une soupape 8 est quant à elle prévue pour l'échappement des gaz brûlés hors du cylindre 4. Le moteur correspondant comporte par exemple plusieurs cylindres et le système d'alimentation représenté est commun à tous les cylindres ou à une partie de ceux-ci.

Ce système d'alimentation en air comporte, d'amont en aval, une entrée d'air 10, un débitmètre d'air massique 12, un turbocompresseur 14, une chambre appelée intercooler 16, un papillon 18 disposé dans un conduit dans lequel passe l'air alimentant les cylindres et permettant d'agir sur la section de débit d'air de ce conduit, ainsi qu'un collecteur d'admission 20. Les soupapes d'admission 6 sont chacune en liaison directe avec le collecteur d'admission 20.

En aval des cylindres 4, les gaz brûlés, ou gaz d'échappement, sortant par les soupapes 8 d'échappement pénètrent dans un collecteur d'échappement 22. Il s'agit d'une tubulure collectant les gaz d'échappement avant de les rejeter, après traitement, à l'air libre. Dans le cas présent d'un moteur turbocompressé, le collecteur d'échappement 22 rassemble les gaz brûlés pour les conduire vers la turbine du turbocompresseur 14. En aval de celui-ci, les gaz d'échappement passent dans un catalyseur et un pot d'échappement (non représentés) avant d'être rejetés.

Le turbocompresseur 14 comporte deux turbines reliées entre elles par un arbre. Une première turbine est disposée après le collecteur d'échappement 22 et est entraînée en rotation par les gaz brûlés sortant des cylindres 4 par les soupapes d'échappement 8 et guidés par le collecteur d'échappement 22. La seconde turbine, appelée compresseur, est disposée, comme indiqué plus haut, dans le système d'alimentation en air du moteur et met sous pression l'air se trouvant dans l'intercooler 16. De façon classique, une vanne de décharge de turbocompresseur 24 permet de "court-circuiter" la turbine disposée en aval du collecteur d'échappement 22.

Une telle structure est habituelle pour un moteur turbocompressé. La présente invention concerne un moteur équipé d'un système d'admission de ce type dans lequel la position du papillon 18 est commandée soit mécaniquement, soit électriquement. Dans ce dernier cas, pour gérer le débit d'air dans le moteur, il convient de réguler à la fois l'angle d'ouverture du papillon 18 et l'ouverture de la vanne de décharge du turbocompresseur 24. Il convient alors de gérer le moteur de telle sorte que la requête du conducteur exprimée grâce à une pédale d'accélérateur soit exécutée par le moteur. La requête du conducteur peut s'interpréter en termes de couple. Une position de la pédale d'accélérateur correspond alors très schématiquement à un couple requis. Il convient donc de déterminer les paramètres (ouverture du papillon 18 et position de la vanne de décharge du turbocompresseur 24) permettant d'obtenir le couple requis. La pression régnant dans le collecteur d'échappement 22 peut être utilisée ici pour déterminer le couple du moteur, cette pression pouvant être à l'origine de pertes de couple non négligeables.

La pression d'échappement peut être déterminée par un capteur mesurant celle-ci. Ceci augmente alors le prix de revient du moteur car il n'est jusqu'à présent pas prévu de placer un tel capteur dans un moteur.

L'idée à l'origine de la présente invention est de pouvoir se passer de ce capteur et de déterminer la pression d'échappement à l'aide des paramètres déjà mesurés dans un moteur. La présente invention permet ainsi de déterminer cette pression uniquement à l'aide des capteurs habituellement disponibles dans un moteur turbocompressé. Elle permet aussi, pour un moteur qui serait équipé d'un capteur de la pression d'échappement, de se passer d'un autre capteur tel par exemple un capteur pour déterminer la pression dans le collecteur d'admission 20 ou bien le débit d'air massique. Dans le cas de la présence de deux capteurs, un pour déterminer la pression à l'échappement et l'autre à l'admission, l'invention permet un fonctionnement en mode "dégradé", en cas par exemple de défaillance du capteur de pression dans le collecteur d'admission, sans perte d'information par rapport à un fonctionnement normal du moteur.

L'originalité de l'invention est de faire un parallèle entre l'amont et l'aval du moteur, c'est-à-dire entre la pression régnant dans le collecteur d'admission 20 et la pression d'échappement dans le collecteur d'échappement 22. Des explications par le calcul peuvent justifier ce parallèle comme montré ci-après.

On suppose par approximation que la pression régnant dans un cylindre 4 est constante durant la phase de remplissage de ce cylindre 4. Cette pression est alors égale à la pression régnant dans le collecteur d'admission 20. Cette pression est appelée par la suite MAP. De même, on suppose que la température de l'air remplissant le cylindre est constante et vaut $T_c$. De plus on considère que la soupape d'admission 6 s'ouvre au point mort haut (PMH) du piston 2 et se ferme à son point mort bas (PMB).

Le cylindre 4 contient juste avant la phase d'admission d'air frais une quantité de gaz brûlés et la pression de ces gaz est Pb. On peut alors déterminer la masse Bgm des gaz brûlés se trouvant dans le cylindre 4 juste avant l'ouverture de la soupape 6 par l'expression :

$$\text{(a)} \quad Bgm = V_{PMH} * Pb / R * T_{\text{éch}}$$

où $V_{PMH}$ est le volume du cylindre quand il est au point mort haut,

$T_{\text{éch}}$ est la température des gaz brûlés, et

R est la constante des gaz parfaits.

De même on peut déterminer la masse de gaz Cgm contenue dans le cylindre 4 après la phase d'admission par l'expression :

$$\text{(b)} \quad Cgm = V_{PMB} * MAP / R * T_c$$

où $V_{PMB}$ est le volume du cylindre quand il est au point mort bas.

En un cycle, la masse de gaz Nam passant par un cylindre est donc la suivante :

$$\text{(c)} \quad Nam = Cgm - Bgm$$

De ces trois équations, on déduit l'équation suivante :

$$\text{(d)} \quad Nam = (V_{PMB} * MAP / R * T_c) - (V_{PMH} * Pb / R * T_{\text{éch}})$$

Soit alors MafCyl la masse d'air passant dans un cylindre 4 par unité de temps. Cette masse MafCyl dépend du régime N du moteur et de Nam et s'écrit sous la forme suivante :

$$\text{(e)} \quad MafCyl = f(N) * g(T_c) * MAP - h(N) * k(AMP) * l(T_{\text{éch}})$$

f, g, h, k et l sont des fonctions qui intègrent les diverses variables des équations précédentes.

La variable AMP apparaît car la pression Pb correspondant aux gaz brûlés est une grandeur qui est tout d'abord dépendante des paramètres intrinsèques du moteur et du régime moteur N mais aussi de la pression ambiante extérieure.

Il est également possible de déterminer MafCyl d'une autre manière, en considérant les gaz brûlés sortant au niveau de l'échappement. Ainsi en appliquant la loi des gaz parfaits, de même que pour les équations (a) et (b), on obtient :

$$\text{(f)} \quad MafCyl = ff(N) * ll(T_{\text{éch}}) * P_{\text{éch}}$$

où $P_{\text{éch}}$ est la pression régnant dans le collecteur d'échappement.

En combinant les équations (e) et (f) on obtient finalement :

$$\text{(g)} \quad MAP = [ff(N) * ll(T_{\text{éch}}) * P_{\text{éch}} + h(N) * k(AMP) * l(T_{\text{éch}})] / [f(N) * g(T_c)]$$

Cette formule donne donc une relation entre la pression régnant dans le collecteur d'admission 20 et la pression régnant dans le collecteur d'échappement 22. Cette relation met en jeu le régime du moteur N, la température d'échappement $T_{\text{éch}}$ et la pression ambiante AMP. Tous ces paramètres sont déterminés par un capteur ou par modélisation de façon connue dans un moteur turbocompressé de l'art antérieur.

Grâce à cette formule (g), on peut donc déterminer, dans la mesure où l'on dispose d'un capteur de pression à l'échappement, de la pression dans le collecteur d'admission 20. On peut aussi inverser cette formule pour obtenir, à l'aide d'un capteur donnant la pression dans le collecteur d'admission 20, la pression à l'échappement.

Les essais réalisés pour montrer que les valeurs calculées correspondent bien aux valeurs mesurées ont, malgré les hypothèses et approximations faites, donné de manière surprenante d'excellents résultats. La corrélation entre la valeur calculée et la valeur mesurée est sensiblement supérieure, selon les essais, à 0,9.

Ces essais ont permis également de montrer que :

$$\text{(h)} \quad f(N) = ff(N)$$

On définit alors une nouvelle fonction de la manière suivante :

$$\text{(i)} \quad hh(N) = h(N) / f(N)$$

L'équation (g) devient alors équivalente à :

$$\text{(j)} \quad MAP = [ll(T_{\text{éch}}) * P_{\text{éch}} + hh(N) * k(AMP) * l(T_{\text{éch}})] / g(T_c)$$

qui traduit l'équation (g) sous une forme simplifiée. Cette équation, une fois inversée pour donner la pression d'échappement en fonction de la pression du collecteur d'admission 20 s'exprime de la manière suivante :

$$\text{(k)} \quad P_{\text{éch}} = [g(T_c) * MAP - hh(N) * k(AMP) * l(T_{\text{éch}})] / ll(T_{\text{éch}})$$

Ici, aucune calibration additionnelle n'est nécessaire pour déterminer la pression d'échappement. La calibration est déjà réalisée dans le logiciel et peut être réutilisée grâce à la réversibilité du modèle utilisé.

On remarque qu'un décalage existe entre la pression à l'échappement et la pression d'admission. Dans un moteur à quatre temps, il faut deux tours de vilebrequin pour que l'air sous la pression MAP dans le collecteur d'admission 20 se retrouve dans le collecteur d'échappement 22 à la pression $P_{\text{éch}}$. Lorsque le moteur est en régime permanent, ce décalage est bien entendu sans incidence. Par contre, lors de régimes transitoires, il faut tenir compte de ce décalage notamment lors de variations importantes de ces pressions. Ce décalage entre bien entendu en jeu lorsque la valeur de MAP est calculée en fonction de $P_{\text{éch}}$ mais pas lorsque la pression $P_{\text{éch}}$ est calculée en fonction de MAP. En effet, lorsque la pression à l'échappement est déterminée par le calcul à partir de la pression dans le collecteur d'admission 20, il suffit de tenir compte du décalage dans le temps qui est fonction du régime N du moteur.

Une première stratégie, donnée ici à titre d'exemple non limitatif, pour prendre en compte ce décalage consiste à calculer un intégrateur de la valeur de MAP basé d'une part sur la valeur initiale de cette pression lorsque le moteur est à l'arrêt et d'autre part sur la différence entre le flux d'air au niveau du papillon 18 et au niveau du cylindre 4. En régime constant, que l'on peut constater par exemple en observant le gradient de variation de la position angulaire du papillon 18, la valeur de la pression MAP dans le collecteur d'admission 20 est déterminée en fonction de la pression à l'échappement.

Une autre stratégie consiste à calculer tout d'abord la pression MAP en fonction de la pression à l'échappement $P_{\text{éch}}$. Cette valeur calculée de la pression MAP est alors réinjectée dans le système de contrôle du flux d'air et une variation est alors constatée en régime transitoire. Pour prendre en compte le décalage, on augmente la pente correspondant à cette variation.

Le procédé proposé pour calculer $P_{\text{éch}}$ ou bien encore MAP peut également être utilisé pour la détermination de la pression ambiante. En effet, on remarque que lorsque le papillon 18 reste fermé pendant un laps de temps prédéterminé, c'est-à-dire lorsque son ouverture est inférieure à une valeur prédéterminée durant ce laps de temps, on observe que :

$$(I) \quad P_{\text{éch}} - AMP = \phi(N)$$

où $\phi$ est une fonction que l'on peut déterminer pour chaque moteur.

La description qui précède montre ainsi que l'on peut envisager dans un moteur turbocompressé de déterminer le flux d'air dans les cylindres, et également la pression ambiante, à partir de la connaissance de la pression à l'échappement. On peut ainsi envisager de remplacer dans un moteur un capteur permettant de déterminer la pression d'alimentation en air des cylindres par un capteur de la pression dans le collecteur d'échappement. On peut également prévoir deux capteurs. Dans ce cas, le deuxième capteur est destiné par exemple à contrôler le premier ou bien à se substituer à lui en mode dégradé. Dans ce dernier cas, le mode dégradé est alors aussi performant que le mode de fonctionnement normal.

En outre grâce à la réversibilité du modèle exposé, la pression à l'échappement peut être modélisée sans aucune calibration complémentaire.

La présente invention ne se limite pas à la forme de réalisation décrite ci-dessus à titre d'exemple non limitatif. Elle concerne également toutes ses variantes à la portée de l'homme du métier dans le cadre des revendications ci-après.

## Revendications

1. Procédé de gestion de l'alimentation en air d'un moteur turbocompressé comportant un collecteur d'admission (20) en aval du compresseur du turbocompresseur (14) et un collecteur d'échappement (22) en amont de la turbine du turbocompresseur (14) dans lequel on détermine le débit d'air massique alimentant le moteur et/ou la pression régnant dans le collecteur d'admission (20) ainsi que la température dans le collecteur d'échappement, **caractérisé en ce que** la pression dans le collecteur d'échappement (22) est déterminée en fonction de la pression régnant dans le collecteur d'admission (20), du régime du moteur, des températures régnant dans les cylindres (4) et dans le collecteur d'échappement (22).

2. Procédé de gestion selon la revendication 1, **caractérisé en ce qu'**un coefficient correcteur dépendant de la pression ambiante environnante est prévu.

3. Procédé de gestion selon la revendication 2, **caractérisé en ce que** la pression dans le collecteur d'échappement (22) $P_{\text{éch}}$ se calcule par une formule du type :

$$P_{\text{éch}} = [A(T_c) * MAP - B(N, AMP, T_{\text{éch}})] / C(T_{\text{éch}}),$$

où A, B et C sont des fonctions prédéterminées, $T_c$ la température dans les cylindres, MAP la pression dans le collecteur d'admission, N le régime du moteur, AMP la pression ambiante et $T_{\text{éch}}$ la température des gaz brûlés dans le collecteur d'échappement.

4. Procédé de gestion selon l'une des revendications 1 à 3, **caractérisé en ce que** le débit d'air alimentant le moteur est régulé à l'aide d'un papillon (18), **en ce que** lorsque ce papillon (18) reste proche de sa position fermée dans des limites prédéterminées durant un laps de temps prédéfini, la pression ambiante AMP extérieure est calculée à partir de la pression à l'échappement en fonction du régime du moteur.

5. Procédé de gestion de l'alimentation en air d'un moteur turbocompressé comportant un collecteur d'admission (20) en aval du compresseur du turbocompresseur (14) et un collecteur d'échappement (22) en amont de la turbine du turbocompresseur (14) dans lequel on détermine le débit d'air massique alimentant le moteur et/ou la pression régnant dans le collecteur d'admission (20) ainsi que la température dans le collecteur d'échappement (22), **caractérisé en ce que** la pression dans le collecteur d'échappement (22) est mesurée à l'aide d'un capteur ou similaire, et **en ce que** la pression régnant dans le collecteur d'admission (20) est déterminée à partir de la pression d'échappement mesurée en fonction du régime du moteur, des températures régnant dans les cylindres (4) et dans le collecteur d'échappement (22).

**6.** Procédé de gestion selon la revendication 5, **caractérisé en ce qu'**un coefficient correcteur dépendant de la pression ambiante environnante est prévu.

**7.** Procédé de gestion selon la revendication 6, **caractérisé en ce que** la pression dans le collecteur d'admission MAP se calcule par une formule du type :

$$MAP = [F(N, T_{éch}) * P_{éch} + G(N, AMP, T_{éch})] / [H(N, T_c)],$$

où F, G et H sont des fonctions prédéterminées, $T_c$ la température dans les cylindres, $P_{éch}$ la pression dans le collecteur d'échappement, N le régime du moteur, AMP la pression ambiante et $T_{éch}$ la température des gaz brûlés dans le collecteur d'échappement.

**8.** Procédé de gestion selon l'une des revendications 1 à 7, **caractérisé en ce que** la température dans le collecteur d'échappement (22) est obtenue à partir d'une modélisation.

**Claims**

**1.** Air supply control method for a turbocharged engine having an intake manifold (20) downstream of the compressor of the turbocharger (14) and an exhaust manifold (22) upstream of the turbine of the turbocharger (14), in which the mass air flow supplied to the engine and/or the pressure in the intake manifold (20) are determined, together with the temperature in the exhaust manifold,
**characterised in that** the pressure in the exhaust manifold (22) is determined as a function of the pressure in the intake manifold (20), the engine speed and the temperatures in the cylinders (4) and in the exhaust manifold (22).

**2.** Control method according to claim 1, **characterised in that** a correction factor dependent on the ambient surrounding pressure is provided.

**3.** Control method according to claim 2, **characterised in that** the pressure in the exhaust manifold (22) $P_{exh}$ is calculated by a formula of the type:

$$P_{exh} = [A(T_c) * MAP - B(N, AMP, T_{exh})] / C(T_{exh}),$$

where A, B and C are predetermined functions, $T_c$ is the temperature in the cylinders, MAP is the pressure in the intake manifold, N is the engine speed, AMP is the ambient pressure and $T_{exh}$ is the temperature of the burnt gases in the exhaust manifold.

**4.** Control method according to one of claims 1 to 3,
**characterised in that** the air flow supplied to the engine is regulated by means of a throttle valve (18) and **in that**, when this throttle valve (18) remains near its closed position within predetermined limits during a specified time interval, the ambient external pressure AMP is calculated on the basis of the exhaust pressure as a function of the engine speed.

**5.** Air supply control method for a turbocharged engine having an intake manifold (20) downstream of the compressor of the turbocharger (14) and an exhaust manifold (22) upstream of the turbine of the turbocharger (14), in which the mass air flow supplied to the engine and/or the pressure in the intake manifold (20) are determined, together with the temperature in the exhaust manifold (22),
**characterised in that** the pressure in the exhaust manifold (22) is measured by means of a sensor or the like and **in that** the pressure in the intake manifold (20) is determined on the basis of the exhaust pressure measured as a function of the engine speed and the temperatures in the cylinders (4) and in the exhaust manifold (22).

6. Control method according to claim 5, **characterised in that** a correction factor dependent on the ambient surrounding pressure is provided.

7. Control method according to claim 6, **characterised in that** the pressure in the intake manifold MAP is calculated by a formula of the type:

$$MAP = [F(N, T_{exh}) * P_{exh} + G(N, AMP, T_{exh})] / [H(N, T_c)],$$

where F, G and H are predetermined functions, $T_c$ is the temperature in the cylinders, $P_{exh}$ is the pressure in the exhaust manifold, N is the engine speed, AMP is the ambient pressure and $T_{exh}$ is the temperature of the burnt gases in the exhaust manifold.

8. Control method according to one of claims 1 to 7,
   **characterised in that** the temperature in the exhaust manifold (22) is determined on the basis of modelling.

**Patentansprüche**

1. Luftzufuhrsteuerverfahren eines Motors mit Turbolader, der einen nach dem Verdichter des Turboladers (14) angeordneten Ansaugkrümmer (20) und einen vor der Turbine des Turboladers (14) angeordneten Abgaskrümmer (22) umfasst, bei dem der Luftmassendurchfluss bestimmt wird, der den Motor versorgt, und/oder der Druck, der in dem Ansaugkrümmer (20) herrscht, ebenso wie die Temperatur in dem Abgaskrümmer,
   **dadurch gekennzeichnet, dass** der Druck in dem Abgaskrümmer (22) in Abhängigkeit von dem Druck bestimmt wird, der in dem Ansaugkrümmer (20) herrscht, von der Motordrehzahl, von den Temperaturen, die in den Zylindern (4) und in dem Abgaskrümmer (22) herrschen.

2. Steuerverfahren nach Anspruch 1, **dadurch gekennzeichnet, dass** ein Korrekturkoeffizient vorgesehen ist, der von dem umgebenden Umgebungsdruck abhängt.

3. Steuerverfahren nach Anspruch 2, **dadurch gekennzeichnet, dass** der Druck in dem Abgaskrümmer (22) $P_{Aus}$ nach einer Formel des folgenden Typs berechnet wird:

$$P_{Aus} = [A(T_z) * MAP - B(N, AMP, T_{Aus})] / C(T_{Aus}),$$

wobei A, B und C vorbestimmte Funktionen sind, $T_z$ die Temperatur in den Zylindern, MAP der Druck in dem Ansaugkrümmer, N die Motordrehzahl, AMP der Umgebungsdruck und $T_{Aus}$ die Temperatur der verbrannten Gase in dem Abgaskrümmer.

4. Steuerverfahren nach einem der Ansprüche 1 bis 3, **dadurch gekennzeichnet, dass** der Luftdurchfluss, der den Motor versorgt, mit Hilfe einer Drosselklappe (18) gesteuert wird, dadurch, dass, wenn die Drosselklappe (18) während eines vorbestimmten Zeitraums in vorbestimmten Grenzen nahe an ihrer geschlossenen Position bleibt, der äußere Umgebungsdruck AMP anhand des Drucks beim Auslassen in Abhängigkeit von der Motordrehzahl berechnet wird.

5. Luftzufuhrsteuerverfahren eines Motors mit Turbolader, der einen nach dem Verdichters des Turboladers (14) angeordneten Ansaugkrümmer (20) und einen vor der Turbine des Turboladers (14) angeordneten Abgaskrümmer (22) umfasst, bei dem der Luftmassendurchfluss bestimmt wird, der den Motor versorgt, und/oder der Druck, der in dem Ansaugkrümmer (20) herrscht, ebenso wie die Temperatur in dem Abgaskrümmer (22),
   **dadurch gekennzeichnet, dass** der Druck in dem Abgaskrümmer (22) mit Hilfe eines Sensors oder Ähnlichem gemessen wird, und dadurch, dass der Druck, der in dem Ansaugkrümmer (20) herrscht, anhand des Auslassdrucks bestimmt wird, der in Abhängigkeit von der Motordrehzahl, von den Temperaturen, die in den Zylindern (4) und im Abgaskrümmer (22) herrschen.

6. Steuerverfahren nach Anspruch 5, **dadurch gekennzeichnet, dass** ein Korrekturkoeffizient vorgesehen ist, der von dem umgebenden Umgebungsdruck abhängt.

7. Steuerverfahren nach Anspruch 6, **dadurch gekennzeichnet, dass** der Druck im Ansaugkrümmer MAP nach einer Formel des folgenden Typs berechnet wird: MAP = [F(N, $T_{Aus}$) * $P_{Aus}$ + G(N, AMP, $T_{Aus}$)] / [H(N, $T_z$)], wobei F, G und H vorbestimmte Funktionen sind, $T_z$ die Temperatur in den Zylindern, $P_{Aus}$ der Druck im Abgaskrümmer, N die Motordrehzahl, AMP der Umgebungsdruck und $T_{Aus}$ die Temperatur der verbrannten Gase im Abgaskrümmer.

8. Steuerverfahren nach einem der Ansprüche 1 bis 7, **dadurch gekennzeichnet, dass** die Temperatur im Abgaskrümmer (22) anhand einer Modellbildung erhalten wird.

Fig. 1